# EUROPEAN PATENT APPLICATION

(11) **EP 1 933 232 A2**
(43) Date of publication of application: **18.06.2008**
(21) Application number: 07122276.4
(22) Date of filing: 04.12.2007
(51) Int. Cl.: G06F 3/048

(54) **Method and terminal for implementing preview function**

(30) Priority: 04.12.2006 KR 20060121699
(71) Applicant: Samsung Electronics Co., Ltd., Suwon-si, Gyeonggi-do (KR)
(72) Inventor: Kum, Jun-Sang, Gyeonggi-do (KR)
(74) Representative: Grünecker, Kinkeldey, Stockmair & Schwanhäusser Anwaltssozietät

(57) **Abstract**

A method for implementing a preview function which enables a user to easily view any user data on a mobile terminal having two display units is disclosed. When a request for checking user data is input, the mobile terminal displays a list of corresponding user data files on one display unit. At the same time, the mobile terminal displays the content of the user data file, which is focused by an indicator in the displayed list, on the other display unit. Thus, the user can easily check and view each user data file simply by moving the indictor in the list, which enhances the user's convenience.

## Description

The present invention relates to a mobile terminal, and in particular, to a method and a mobile terminal for implementing a preview function to enable a user to easily preview any user data.

Mobile terminals implement various functions according to the user data processing or the user's input of demands. A conventional method of implementing a function in a mobile terminal is to select a corresponding menu provided in the mobile terminal. Each menu is then set to implement a preset function. When a user presses a key to select a specific menu, the mobile terminal displays the menu and items contained under the menu. When the user selects an item, the mobile terminal then implements a corresponding function.

Moreover, conventional mobile terminals have a hierarchical menu structure. Users have to press keys to move from a menu of an upper hierarchy to a menu item of a lower hierarchy in order to search for desired data. The more user data is stored in a mobile terminal, the more key-pressings are required to search for desired data. Users may need to open and view every data until they search for desired data. For example, when a user selects a text message menu to check received text messages, a list of received text messages is displayed on a display screen. The user can view only part of each message from the displayed list. In order to view the full text of a specific message, the user has to select the message from the list and then press the OK key.

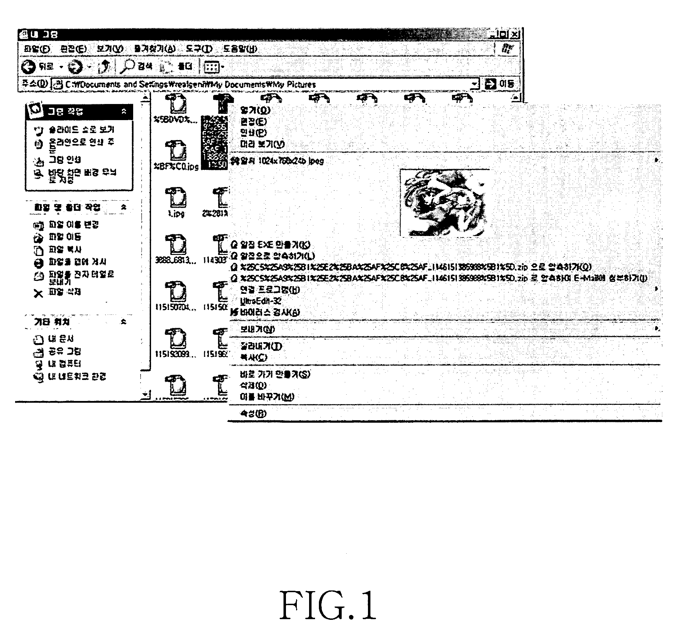

Windows desktop operating systems support a preview function. In this case, when a user accesses a predefined format file, for example, an image file as illustrated in FIG 1, Windows desktop operating systems implement the preview function to display an image contained in the accessed file. FIG. 1 is a screenshot showing a preview function implemented in a Windows desktop operating system having a Graphical User Interface (GUI). The conventional preview function can be implemented in a limited environment, such as GUI embedded Windows, and in particular format files, such as image files. In addition, the preview function is generally available in a computer having a large screen and high processing capability, and is suitable for a device with a mouse.
However, the preview function is not suitable for a mobile environment because a separate input means, such as a mouse, is needed to implement the function. Moreover, the preview function can be implemented only in image files at present, which does not meet the user's demand for creating visual previews of various file contents. To meet the demand, an interface to user data is needed to enhance the user's convenience in displaying and creating previews of various user data. A method for implementing the preview function in a mobile terminal having a small display screen is also required.

Accordingly, the present invention has been made to solve the above-mentioned problems and/or disadvantages occurring in the prior art and to provide at least the advantages below. Accordingly, the object of the present invention is to provide a method and a mobile terminal for implementing a preview function.

This object is solved by the subject matter of the independent claims.

Preferred embodiments are defined in the dependent claims.

An aspect of the present invention is to provide a method and a mobile terminal for implementing a preview function which enables a user to easily preview and check any user data.

According to one aspect of the present invention, there is provided a method for implementing a preview function in a mobile terminal having a first display unit and a second display unit. The method includes displaying a list of user data files on the first display unit when a request for checking user data is inputted; checking each user data file focused by an indicator in the displayed list; and changing a keypad pattern displayed on the second display unit for a key input into a preview screen for displaying the content of the user data file focused by the indicator.
According to another aspect of the present invention, there is provided a mobile terminal capable of implementing a preview function. The terminal includes a first display unit for displaying a list of user data files; a second display unit for displaying a keypad pattern for a key input; and a control unit for reading out a list of user data files in response to a user's request for checking user data, displaying the list of user data files on the first display unit, and changing the keypad pattern on the second display unit into a preview screen for displaying the content of a user data filed focused by an indicator in the list displayed on the first display unit.

The above and other aspects, features and advantages of the present invention will be more apparent from the following detailed description taken in conjunction with the accompanying drawings, in which:
FIG. 1 is a screenshot showing a preview function implemented in a conventional Windows desktop operating system.
FIG. 2 is a view showing a mobile terminal having two display units according to a preferred embodiment of the present invention;
FIG. 3 is a block diagram of a mobile terminal capable of implementing a preview function according to a preferred embodiment of the present invention;
FIG. 4 is a flow diagram showing a process of implementing a preview function in a mobile terminal according to a preferred embodiment of the present invention;
FIGs. 5A and 5B are screenshots showing a preview function implemented on a text message according to a preferred embodiment of the present invention; and
   FIGs. 6A to 6C are screenshots showing a preview function implemented on a image file according to a preferred embodiment of the present invention.

Hereinafter, exemplary embodiments of the present invention will be described with reference to the accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear.

The present invention provides a method for implementing a preview function which enables a user to easily view any user data on a mobile terminal having two display units. In operation, when a request for checking user data is inputted, the mobile terminal displays a list of corresponding user data files on one display unit. At the same time, the mobile terminal displays the content of the user data file, which is focused by an indicator in the displayed list, on the other display unit. The user can easily check and view each user data file by moving the indictor in the list, which enhances the user's convenience.

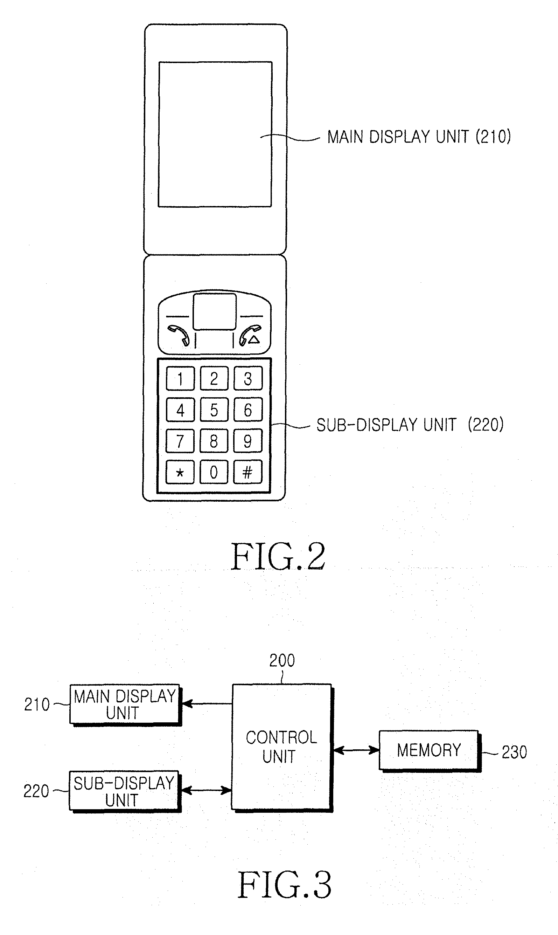

FIG. 2 is a view showing a mobile terminal having two display units for implementing a preview function according to a preferred embodiment of the present invention. As illustrated in FIG. 2, the mobile terminal has two housings, i.e. a main housing with a speaker placed closely to the ear and a sub-housing with a battery mounted therein. A main display unit 210 is provided on the main housing, and a sub-display unit 220 on the sub-housing.

The sub-display unit 220 has normally a keypad pattern. It detects a key input on the keypad pattern and outputs corresponding key input data. In other words, the sub-display unit 220 is a touch screen displaying a keypad pattern which functions the same as a conventional keypad. The main display unit 210 can also be a touch screen.

FIG. 3 is a block diagram of a mobile terminal capable of implementing a preview function according to a preferred embodiment of the present invention. The configuration and operation of the mobile terminal will be explained in detail with reference to FIG. 3.

In FIG. 3, a control unit 200 controls the overall operations of the mobile terminal. Particularly, when a request for checking user data is inputted, the control unit 200 controls the sub-display unit 220 to change a normal keypad pattern to a preview screen for displaying the content of a user data file which is focused by an indicator. In other words, the control unit 200 implements the preview function on the sub-display unit 220 so that the user can easily check and view a desired user data file.

The preview function enables the user to easily view the contents of various user data files, without the need for multiple key inputs. According to a preferred embodiment of the present invention, the preview function is implemented using the two display units 210 and 220. In a conventional mobile terminal two display units are seldom included due to the limited size of the terminal. As a solution to this problem, the present invention configures at least one of the two display units to be a touch screen, which normally serves as a keypad for a key input and changes into a display screen for displaying information upon the user's request. Since the preview function is implemented on the touch screen, the user can view the content of desired user data without the need to repetitively input keys.

The main display unit 210 displays data corresponding to a key inputted through the normal keypad pattern of the sub-display unit 220. The main display unit 210 also displays the operational status of the mobile terminal and various information using icons and/or characters. Under the control of the control unit 200, the main display unit 210 visually displays status showing the setting or implementation of a function selected by the user. The main display unit 210 can be either a Liquid Crystal Display (LCD) or a touch screen like the sub-display unit 220.

The sub-display unit 220 is a touch screen which displays a keypad pattern including a plurality of alphanumeric keys, function keys and direction keys. The user can select and input a key on the touch screen using an input means, such as a stylus pen. The sub-display unit 200 outputs key input data corresponding to the inputted key to the control unit 200. When the sub-display unit 220 serves as a preview screen, it displays the content of a user data file, which is focused by an indicator in a list of user data files displayed on the main display unit 210.

A memory 230 stores programs necessary to control the overall operations of the mobile terminal. The memory 230 also stores various data input, output or processed during the operation of the mobile terminal. The memory 230 stores user data in various formats, for example, received or sent text messages, photo files, images, and schedule data.

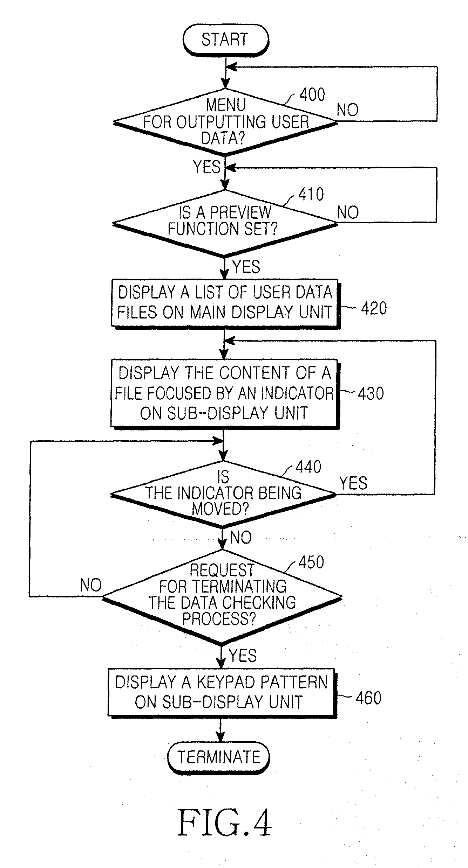

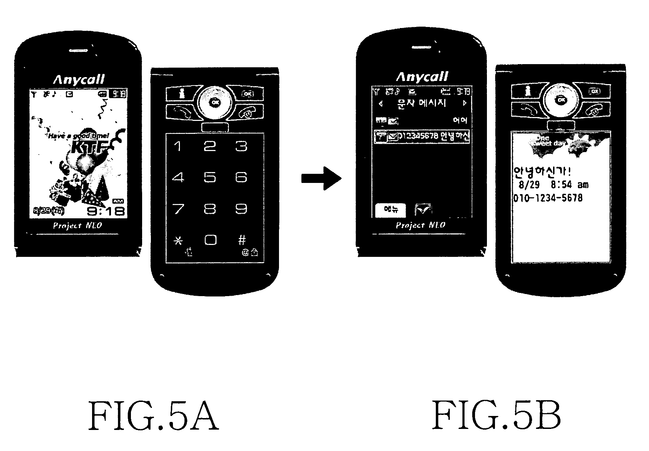

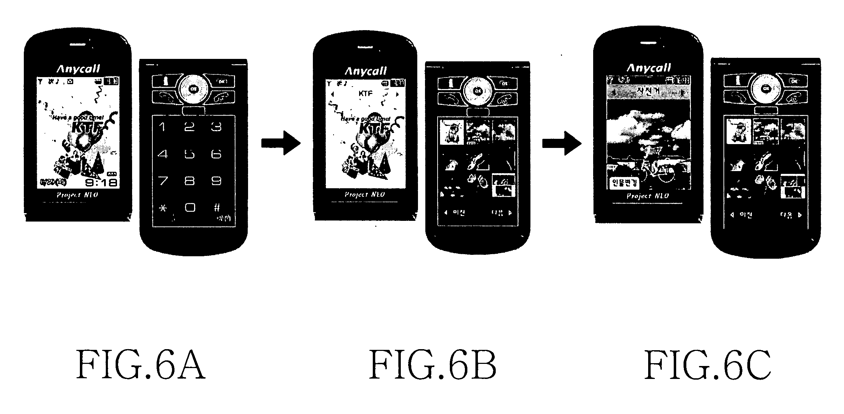

A process of implementing a preview function in a mobile terminal according to a preferred embodiment of the present invention is described below with reference to FIG. 4. Although a preview of a text message and a preview of an image file are illustrated in FIGs. 5 and 6, the preview function is not limitedly implemented only on data files in such specific formats.

In FIG. 4, the control unit 200 determines whether the user selects a menu for outputting user data in step 400. The menu for outputting user data refers to a menu for checking user data, such as text messages. When the menu is selected, the control unit 200 determines whether a preview function is set in step 410. The preview function can be set or cancelled by the user through a related menu. If the preview function is set, the control unit 200 will proceed to step 420 in order to display a list of user data files on the main display unit 210. The control unit 200 confirms the user data file focused by an indicator in the list, and then proceeds to step 430 in order to display the content of the focused user data file on the sub-display unit 220.

For example, FIG. 5A shows that the sub-display unit 220 displays a normal keypad pattern. In this case, when the user selects a menu for checking received text messages, the main display unit 210 displays a list of received text messages. At the same time, the sub-display unit 220 changes the keypad pattern to a preview screen as illustrated in FIG. 5B so that the content of the text message focused by the indicator can be displayed thereon.

The indicator, which appears on the main display unit 210, is used to select a desired user data file from the displayed list. The control unit 200 detects whether the user moves the indicator in step 440. When the user moves the indicator, the control unit 200 repeats step 430 in order to display the content of another user data file newly focused by the indicator on the sub-display unit 220. If the indicator is not being moved, the control unit 200 will proceed to step 450 in order to determine whether the user inputs a request for terminating the data checking process. If a key to terminate is inputted, the control unit 200 will proceed to step 460 in order to change the preview screen of the sub-display unit 220 to the normal keypad pattern.

As described above, when any user data file is selected from the list displayed on the main display unit 210 with the movement of the indicator, the content of the selected user data file is displayed on the sub-display unit 220. The user can move the indicator by inputting a direction key or using a stylus pen. A data file, on which the indicator is located, becomes colored or highlighted.

A preview display of a text message on the sub-display unit 220 is described above with reference to FIGs. 5A and 5B. On the other hand, as illustrated in FIGs. 6A to 6C, a preview of the content of user data can also be displayed on the main display unit 210. If a request for checking image files is inputted while the sub-display unit 220 is displaying a keypad pattern as illustrated in FIG. 6A, the sub-display unit 220 will change to display a list of images as illustrated in FIG. 6B. The list of images shows each image at a reduced size. When the user locates the indicator on a specific image in the list, the main display unit 210 displays the image at an enlarged size on the full screen as illustrated in FIG. 6C. As described above, the main display unit 210 may be set to display a list of user data files and the sub-display unit 220 to display a preview of a user data file selected from the displayed list using the indicator. The sub-display unit 220 may also be to display a list of user data files and the main display unit 210 to display a preview of a user data file selected from the displayed list using the indicator.

While a list of user data files is displayed on one display unit, the user can move and locate the indicator on a data file desired to preview by locating the indicator on the data file using a direction key. The content of the data file will be automatically displayed on the other display unit even if no request to open the file is inputted.

The preview function according to the present invention can be implemented in various devices having a multi-screen. The preview function can reduce the menu selecting steps and the time generally taken to view desired user data. In addition, the preview function enables the user to view the content of data even without directly selecting the data, which reduces the time to search for data and thereby enhances the user's convenience. The present invention is applicable to mobile devices in every language.

Although FIGs. 5A to 6C illustrate previews of a text message or an image file, the preview function according to the present invention is not limited to those files only. The preview screen can be modified by the user, service providers, or mobile phone manufacturers.

While the invention has been shown and described with reference to certain exemplary embodiments thereof, it will be understood by those skilled in the art that various changes in form and details may be made therein without departing from the scope of the invention as defined by the appended claims.

## Claims

1. A method for implementing a preview function in a mobile terminal having a first display unit and a second display unit, the method comprising:
displaying a list of user data files on the first display unit when a request for checking user data is inputted;
checking each user data file focused by an indicator in the displayed list; and
changing a keypad pattern displayed on the second display unit for a key input into a preview screen for displaying the content of the user data file focused by the indicator.

2. The method according to claim 1, further comprising:
determining whether the indicator is moved during the display of the content of the user data file; and
changing the currently displayed content to the content of a user data file newly focused by the indicator.

3. The method according to claim 1 or 2, wherein the second display unit is a touch screen.

4. The method according to one of claims 1 to 3, wherein the user data file is any one of a text message, a photo file, an image, and schedule information.

5. A mobile terminal capable of implementing a preview function,the terminal comprising:
a first display unit for displaying a list of user data files;
a second display unit for displaying a keypad pattern for a key input; and
a control unit for reading out a list of user data files in response to a user's request for checking user data, displaying the list of user data files on the first display unit, and changing the keypad pattern on the second display unit into a preview screen for displaying the content of a user data filed focused by an indicator in the list displayed on the first display unit.

6. The mobile terminal according to claim 5, wherein said control unit determines whether the indicator is moved during the display of the content of the user data file, and changes the currently displayed content to the content of a user data file newly focused by the indicator.

7. The mobile terminal according to claim 5 or 6, wherein the user data file is any one of a text message, a photo file, an image, and schedule information.
